(19) Europäisches Patentamt

European Patent Office

Office européen des brevets

(11) **EP 4 152 726 B1**

## (12) EUROPEAN PATENT SPECIFICATION

(45) Date of publication and mention of the grant of the patent:
**29.11.2023 Bulletin 2023/48**

(21) Application number: **21204993.6**

(22) Date of filing: **27.10.2021**

(51) International Patent Classification (IPC):
**H04L 45/125** (2022.01)

(52) Cooperative Patent Classification (CPC):
**H04L 45/125**

(54) **METHOD FOR OPTIMIZING A ROUTING IN A COMMUNICATIONS NETWORK**

VERFAHREN ZUR OPTIMIERUNG EINER LEITWEGLENKUNG IN EINEM KOMMUNIKATIONSNETZWERK

PROCÉDÉ D'OPTIMISATION DE ROUTAGE DANS UN RÉSEAU DE COMMUNICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2021 DE 102021004920**

(43) Date of publication of application:
**22.03.2023 Bulletin 2023/12**

(73) Proprietors:
- **Fujitsu Technology Solutions GmbH
  80807 München (DE)**
- **Deutsche Telekom AG
  53113 Bonn (DE)**

(72) Inventors:
- **Geitz, Marc
  58089 Hagen (DE)**
- **Holschke, Oliver
  10969 Berlin (DE)**
- **Schüller, Timmy
  48149 Münster (DE)**

- **Münch, Christian
  80807 München (DE)**
- **Schinkel, Fritz
  80807 München (DE)**
- **Engel, Sebastian
  80807 München (DE)**

(74) Representative: **Epping - Hermann - Fischer Patentanwaltsgesellschaft mbH Schloßschmidstraße 5 80639 München (DE)**

(56) References cited:
**US-A1- 2017 286 852    US-A1- 2020 396 154**

- **JUEXIAO SU ET AL: "Fast Embedding of Constrained Satisfaction Problem to Quantum Annealer with Minimizing Chain Length", 20170618; 1077952576 - 1077952576, 18 June 2017 (2017-06-18), pages 1-6, XP058367890, DOI: 10.1145/3061639.3062246 ISBN: 978-1-4503-4927-7**

**Description**

The invention pertains to a computer-implemented method for optimizing a routing of data traffic in a communications network with a plurality of communication nodes which are connectable over edges (links) of communication paths for a routing of the data traffic. The invention also pertains to a quantum concept processor configured for performing such a method as well as a computer program implemented to perform such a method.

Today's demands regarding data traffic in communications networks increase dramatically in these times. With the recent introduction of 5G, more and more devices and applications push data traffic to new peaks. Moreover, the increasing demand of digitized and decentralized working as well as increasing streaming demands in the domestic environment of private households are other big contributors to this trend. These increasing amounts of data being transported through communications networks like the internet impose a significant challenge to Service Providers. To avoid congestion of communications networks and degradation of user experience, traffic engineering techniques are deployed to complement the comparatively slow and expensive expansion of network infrastructure.

The most widely deployed engineering techniques for data traffic management in communications networks operate on the premise of shortest paths that are computed with respect to link weights. These weights are often related to link capacities, i.e., the maximum amount of data per unit time that can be routed over a link from a starting node to an end node connected by that link respectively edge. The final routing from an origin node to a destination node of the data streams, under the consideration of interim nodes and given links or edges, is based on the identified paths of the shortest paths found. As a result, the most straight-forward and practically oriented technique to guide traffic demands is by manipulation of these link weights that can also be called link metrics or Interior Gateway Protocols (IGP) metrics. The higher the link weight of an edge, the higher the probability of data being routed over the respective edge. Following this approach, in a reactive manner, link weights are adapted locally whenever a certain link tends to be overloaded. In a more systematic manner, the problem has been further dealt with by applying linear integer computer programs, where the optimization targets are the minimization of the maximal link capacity usage in the network. The task of finding a globally optimal set of metrics, however, is very complex. In terms of computational complexity this task is NP-hard. This is because each link metric potentially impacts a large number of communication paths.

The linear optimization techniques applied so far quickly reach their limits when actual non-linear conditions are taken into account, like redundancies, geographical subgroups or subdomains (e.g. European network and US network considered in one model), inclusion of satellites, Quality of Service, QoS, relationships, etc. Moreover, the known techniques often lead to the problem of unused capacity usage and overloads of link capacities in communication paths within a network, where many links are close to their capacity limit.

US 2020/396154 A1 discloses methods, apparatus and computer programs for allocating traffic in a telecommunications network comprising a plurality of nodes, with pairs of nodes being connected by respective links. A method comprises obtaining a plurality of demands for connectivity between respective first nodes and respective second nodes of the telecommunications network, each demand being subject to a respective constraint associated with the connectivity between the respective first node and the respective second node; for each demand, generating a list of possible paths between the first node and the second node satisfying the constraint; based on the list of possible paths for each demand and an indication of traffic usage for each demand, determining, for each demand, weights in respect of each of the possible paths; and providing the weights to nodes of the telecommunications network, for the distribution of traffic associated with each of the plurality of demands to the possible paths in accordance with the respective weights.

The paper "Fast Embedding of Constrained Satisfaction Problem to Quantum Annealer with Minimizing Chain Length" by Juexiao Su et al. discusses solving constrained satisfaction problem (CSP) using D-Wave quantum annealer.

US 2017/286852 A1 discloses a method for determining a minimum connected dominating set in a graph, the method comprising obtaining an indication of an input graph, the input graph comprising a plurality of nodes and a plurality of edges; generating a distance table comprising for each node of the input graph, an indication of a distance between the given node and each of the other node of the plurality of nodes; generating a corresponding constrained binary quadratic programming problem using the generated distance table; providing the corresponding constrained binary quadratic programming problem to a quantum annealing solver; obtaining at least one approximate solution from the quantum annealing solver; post-processing the at least one approximate solution and providing the post-processed at least one approximate solution.

The problem of the present disclosure, therefore, lies in providing enhanced techniques that allow for an optimized utilization of communication paths within a communications network with respect to capacity limits, thereby achieving an optimized routing.

This problem is solved by a method according to claim 1. Further implementations are described in the dependent claims and in the following description.

The method is a computer-implemented procedure for optimizing a routing of data traffic in a communications network with a plurality of communication nodes. The communication nodes are connected by edges of the communications network. A series of edges yields a communication path for a routing of the data traffic. Hence, an edge of a communication path in this context describes a connection between two adjacent nodes within a communication path.

The method comprises the following steps:

- Capturing a set of traffic demands, each traffic demand specifying a transfer of a determined data volume from an origin node to a destination node among the plurality of communication nodes,

- Specifying a set of potential short communication paths among possible communication paths between the respective origin nodes and the respective destination nodes specified in the set of traffic demands, wherein the edges within the set of potential short communication paths are assigned a respective usage capacity limit,

- Calculating, for the set of traffic demands, fractional capacity usages of the edges within the set of potential short communication paths, the fractional capacity usages being calculated based on the respective usage capacity limit,

- Formulating the calculated fractional capacity usages as terms of a quadratic stress function,

- Determining, by using a quantum concept processor, an optimized routing by selecting for each traffic demand of the set of traffic demands one short communication path from the set of potential short communication paths, such that the quadratic stress function is minimized.

This method reliably tackles the problem of routing network demands in a communications network along optimized short paths, thereby avoiding in an optimized manner that link capacities in the network are exceeded.

By applying the method, for every given traffic demand, one optimal option for a short communication path from the set of potential short communication paths can be selected. The selection is chosen such that the capacity of all edges (links) in used communication paths within the network is respected as upper limit for the total volume of traffic demands routed along them.

"Traffic demands" in this context are modelled as 3-tuples, defining an origin node (source of a data stream), an end node or destination node (destination of a data stream), and the determined data traffic to be transferred between origin and destination. The focus is on providing continuous data streams over the network, which are to be modelled and routed in such a way that no data is lost during transmission by exceeding specified capacities on given transport links. Measurement for data transfer rates of such data stream requests or demands are currently specified in Gbps (Gigabit per second).

The "short" communication paths in this context can be selected either as paths with determined intermediate nodes between the respective origin nodes and the respective destination nodes specified in the set of traffic demands, or as direct, shortest paths. According to a detailed implementation explained further below, "short" communication paths with determined intermediate nodes (so called segment nodes) between the respective origin nodes and the respective destination nodes are specified in the set of traffic demands, which each consists of a shortest path from an origin to the segment node and a shortest path from the segment node to a destination node.

By selecting such short paths between respective origin nodes and respective destination nodes, a more or less direct routing can be achieved, thereby avoiding elongated communication paths that disadvantageously burden a plurality of edges along a respective communication path with significant capacity usage in an inefficient manner.

The set of potential short communication paths among possible communication paths between the respective origin nodes and the respective destination nodes is pre-determined by applying, for example, a Dijkstra algorithm or any other algorithm among the class of efficient shortest path algorithms.

By calculating fractional capacity usages of the edges within the set of potential short communication paths and formulating the calculated fractional capacity usages as terms of a quadratic stress function, a quadratic optimization problem can be formulated in order to deal with the complexity of the above-explained optimization problem. The application of such quadratic optimization problem has the effect that a quadratic stress function can be formulated which heavily penalizes a high capacity usage on individual edges of communication paths.

In this way, an optimized routing is determined by selecting for each traffic demand of the set of traffic demands one short communication path from the set of potential short communication paths, such that the quadratic stress function is minimized. The minimum of the quadratic stress function preferably is a global minimum, but can also be a local minimum.

The method, hence, has the technical effect and advantage of a uniformly minimal utilization of the network and distribution of the distance to the capacity limits within the network in order to achieve a uniformly minimal utilization of the network with respect to capacity limits. At the same time, the method provides for a selection of short paths between a respective origin node and a respective destination node for each traffic demand within the communications network.

The underlying quadratic optimization problem, as mentioned above, is very complex. This is not only due to a potential impact of one selected communication path to other communication paths and a vast amount of data traffic to be managed between a plurality of origin nodes and destination nodes in the network. The problem is also very complex because there are many practical constraints that have to be taken into account. As more constraints are implemented, such problems become more complex and difficult to solve. This is problematic or difficult, if traffic engineering solutions are needed fast, for example as a reaction to an unexpected network failure or under consideration of further practical constraints like latency (shortest possible paths, fewest possible IP hops), redundancy (the model should be redundant against failure of one or more/many edges, planned outages or maintenance of network links), Domains (EU, US) or hierarchies (core network, access networks), etc. The herein described method advantageously shows its strength compared to conventional approaches more and more, the more complex the underlying problem is. In other words, for a complex optimization problem taking into consideration practical constraints as explained above, the herein described method has a significant strength over conventional techniques.

The herein described method makes use of an approach inspired by quantum computing. The calculation of optimized solutions of the quadratic stress function for determining optimized communication paths for the set of traffic demands is performed by a so-called quantum concept processor. As a quantum concept processor in the context of the present disclosure a processor is defined that solves a so called "Ising model" or the equivalent quadratic unconstrained binary problem. For example, this is a processor configured to solve an optimization problem by means of quantum annealing or quantum annealing emulation. Such a processor is for example based on conventional hardware technology, for example based on complementary metal-oxide-semiconductor (CMOS) technology. An example of such quantum concept processor is Fujitsu's digital annealer. Alternatively, any other quantum processors can be used for the herein described method, in future times also such technologies that are based on real quantum bit technologies. Further examples of such quantum concept processors are the quantum annealer of DWave (e.g. 5000Q), but also quantum gate computers (IBM, Rigetti, OpenSuperQ, IonQ or Honeywell) making use of quantum optimisation algorithms like QAOA or VQE.

In other words, a quantum concept processor as defined herein is a processor which realises the concept of minimization of a so-called quadratic unconstrained binary optimization (QUBO) function, either on a special processor classic technology, a quantum gate computer or on a quantum annealer.

In at least one implementation, the method further comprises the following steps:

- Specifying a set of potential segment nodes among the plurality of communication nodes, wherein each of the potential segment nodes defines as intermediate node a potential short communication path as member of the set of potential short communication paths between an origin node and a destination node,

- Formulating, in the quadratic stress function, segment node terms that connect the calculated fractional capacity usages of the edges of a respective potential short communication path with those segment nodes within the set of potential segment nodes that lead to the respective potential short communication path,

- Calculating the segment node terms, by using the quantum concept processor, to choose segment nodes within the set of potential segment nodes such that the quadratic stress function is minimized for the determination of the optimized routing.

In this way, for each traffic demand one or more segment nodes are determined individually, such that a so-called segment routing (SR) protocol can be implemented. A set of potential segment nodes among the plurality of communication nodes is, hence, specified, wherein each of the potential segment nodes defines as intermediate node a potential short communication path as member of the set of potential short communication paths between an origin node and a destination node. Segment routing (SR) is a concept to define alternative communication paths between individual origin and destination nodes. For each pair of origin and destination nodes a sequence of one or more so called segment nodes is selected and the route between origin and destination is then given as the concatenation of shortest path between origin and first segment node, shortest paths between a segment node an its respective successor in the sequence of segment nodes and the shortest path between the last segment node and the destination node. A specialization of SR is the n-Segment-Routing (nSR), where up to n-1 segment nodes and hence n shortest path segments are possible as routes between origin and destination. This is a concept of so-called Source Packet Routing in Networking (SPRING). SR gives an additional degree of freedom, since with one or more segment nodes lying in between a respective origin node and a respective destination node certain variations or adaptations in the routing of data traffic can be reverted to. This offers an elegant compromise between static shortest paths and a flexible and variable routing of data traffic.

In an exemplary case that a direct shortest path between a respective origin node and a respective destination node is not available, e.g. due to construction works or maintenance in the network, SR gives an additional degree of freedom. In this way, a selected detour can be chosen in the step of determination of the optimized routing in the above-explained method that, nevertheless, is still a short optimized path in the sense explained above. But also in view of an optimized distributed overall capacity usage in the network, SR gives an additional degree of freedom. In this way, different short paths for different traffic demands (e.g. via different segment nodes) can be selected in order to avoid overloads or critical increase of the capacity usage at respective edges of communication paths in the network.

The connection of calculated fractional capacity usages of the edges within potential communication paths with potential segment nodes (segment node terms) allows for the calculation of an optimized solution (minimum) of the quadratic stress function under consideration of an assignment of different segment nodes into communication paths for different traffic demands according to SR. In this way, an optimized selection of one or more respective segment nodes for each traffic demand can be achieved to fulfil the above-explained optimization problem. Hence, an impact of a selected communication path for one traffic demand to other possible communication paths for other traffic demands can be mitigated. By applying the freedom of the SR, hence, different short communication paths for different traffic demands can be directed over different segment nodes within the network in order to distribute the overall capacity usage within the network. An optimized selection of respective segment nodes is performed by the quantum concept processor.

The set of potential segment nodes can be preselected under the consideration that for each traffic demand a subset of all possible segment nodes is chosen such that the corresponding communication paths are close to the shortest paths between respective origin nodes and respective destination nodes with respect to predetermined capacity usages of the concerned edges in the communication paths. The segment nodes can represent physical network elements such as routers, i.e. nodes, or interfaces, i.e. links.

In at least one implementation of the method, the segment node terms are calculated under consideration of a path condition that each traffic demand of the set of traffic demands is routed along a shortest path or via exactly one segment node between the respective origin node and the respective destination node. Such path condition forms a constraint or "boundary" for the method to realise a so-called two-segment routing (2SR) protocol. For practical networks it turns out that 2SR already provides sufficient flexibility and degrees of freedom compared to general SR, but nevertheless avoids a vast number of segment nodes to be implemented. This keeps implementation costs low. Additionally, 2SR allows for an optimized routing close to a shortest path routing of all traffic demands. For each traffic demand of the set of traffic demands, the quantum concept processor chooses either the shortest paths from the respective origin node to the respective destination node or a 2SR path across one selected segment node from the set of potential segment nodes in order to achieve a minimum of the quadratic stress function, as explained above.

In an alternative implementation of the method, the segment node terms are calculated under consideration of a path condition that each traffic demand of the set of traffic demands is routed along a shortest path or via multiple segment nodes between the respective origin node and the respective destination node. Such path condition forms a constraint or "boundary" for the method to realise a segment routing (SR) protocol instead of a two-segment routing (2SR) protocol.

In at least one implementation of the method, the segment node terms are calculated under consideration of a cost condition such that a number of chosen segment nodes is minimized. In this way, an additional optimization target is formulated and considered in the method that relates to a minimization of the overall number of assigned segment nodes in order to minimize deployment and maintaining costs. In a theoretical approach, the higher the number of assigned segment nodes, the more optimal the solution of the quadratic stress function found by the quantum concept processor. However, a high number of segment nodes means high deployment and maintenance costs of the segment nodes. With the additional optimization target of minimizing the overall number of assigned segment nodes, the minimization of the quadratic stress function can be achieved by the quantum concept processor, thereby achieving a reduction and minimization of the total costs for assigned segment nodes. Both optimization criteria can be balanced against each other, depending on which optimization should be focused on. In at least one implementation of the method, the quadratic stress function is formulated as a quadratic unconstrained binary optimization (QUBO) function. This QUBO function serves as "input" for the quantum concept processor that solves this optimization problem for an optimized routing of all traffic demands according to the above-explained method. Generally speaking, QUBOs are quadratic order polynomials in binary variables which are represented in a quantum concept processor as bits or quantum bits (Q-bits hereinafter). In the context of the optimization problem of the present disclosure, the QUBO function represents the sum of potential contributions of the fractional capacity usages of respective edges within potential communication paths as function of different Q-bits, wherein each Q-bit represents the selection of a path alternative that can assume the value "0" or the value "1". In order to solve the quadratic optimization problem (quadratic stress function), the quantum concept processor runs through different settings of the different Qbits in order to find such solution(s) that minimize the quadratic optimization problem. In this way, a QUBO representation of the optimization problem has elegant properties regarding the here applied quantum concept computing.

In at least one implementation of the method, the quadratic stress function and at least one of the path condition(s) and the cost condition, as explained above, each are weighted and combined into a global QUBO function. This has the advantage that the different partial optimization problems can be weighed against each other. For example, the quadratic stress function and the cost condition depending on the number of chosen segment nodes are weighed against each other, depending on the priority of cost reduction or uniform traffic distribution within the network.

In at least one implementation, the method further comprises the following steps:

- Selecting a subset of traffic demands from the set of traffic demands,

- Performing the method for the subset of traffic demands,

- Storing the determined optimized routing for the subset of traffic demands, and

- Updating a respectively remaining usage capacity limit of the edges within the set of potential short communication paths under consideration of the determined optimized routing for the subset of traffic demands.

In this way, a kind of decomposition strategy can be followed. This has the advantage of or is even necessary for processing the explained method despite limited hardware performance of the quantum concept processor for solving the quadratic optimization problem. Let's assume a high number of required variables to formulate the quadratic optimization problem. Nowadays, the possibilities of current quantum concept processors are still limited. Hence, the very complex quadratic optimization problem has to be decomposed into several partial solutions that can be iteratively processed to find an optimal solution. In each iteration one partial solution is found by the quantum concept processor.

For example, under consideration of a QUBO formulation of the quadratic optimization problem formulated as SR-problem, as explained above, the number of required bit variables (Qbits) to formulate the optimization problem is e.g.

$$|D| \quad x \quad |S|$$

wherein $|D|$ is the number of traffic demands to be processed and $|S|$ is the number of segment nodes considered per demand. In typical data sets underlying the present disclosure, the number of traffic demands $|D|$ is typically a few thousands and the set $|S|$ of segment nodes may contain almost fifty segment nodes.

Taking further into account that a typical quantum concept processor nowadays can solve quadratic optimization problems in the order of 10.000 bit variables (Q-bits), the overall optimization problem has to be solved iteratively with the help of a problem decomposition.

Hence, the optimization problem can be iteratively decomposed by the above-explained measures, wherein a subset of traffic demands from the set of traffic demands is selected and the described method is performed for the subset of traffic demands. Subsequently, the determined optimized routing for the subset of traffic demands is stored and a respectively remaining usage capacity limit of the edges within the set of potential short communication paths is updated under consideration of the determined optimized routing for the subset of traffic demands.

According to an exemplary implementation, to decompose the problem, the traffic demands are sorted by volume in a descending order and split into discrete portions of demands. In particular, the demands with the largest volume can be regarded first, followed then by those demands with the smallest volume. Then, starting with the demands with the largest volume, the corresponding routing optimization problem is iteratively formulated and optimized for each discrete portion of demands with the help of the quantum concept processor. The partial solutions for each discrete portion of demands is stored and the edge capacities are reduced by the usage corresponding to the partial solution found in the previous iteration. Then the method is proceeded with the next subset of demands. In this way, traffic demands with large volume, which require a higher fraction of edge capacities, can access a network little consumed in capacity, since they are considered in the early iterations of the algorithm, while demands with smaller volume are considered in the later iterations of the algorithm and are distributed on the remaining capacities of the network.

In at least one implementation, the method further comprises the following steps:

- Selecting a subset of potential segment nodes from the set of potential segment nodes,

- Performing the method for the subset of potential segment nodes.

Such implementation provides a further specialised decomposition strategy under consideration of the SR as explained above. In order to further save variables (Q-bits), the set $|S|$ of potential segment nodes can be restricted to a subset of potential segment nodes from the set of potential segment nodes for each traffic demand. The calculated and chosen segment nodes for each traffic demand in the sense of an optimized solution (minimum of the quadratic optimization problem) are then stored before the next iteration of the method. For example, the subset of potential segment nodes for each traffic demand can be preselected as those segment nodes that have a close proximity to the shortest paths between respective origin and destination nodes of a respective traffic demand.

According to further implementations, one or more of the above explained decomposition procedures are iteratively performed for the remaining traffic demands until all traffic demands of the set of traffic demands are processed.

The above-mentioned problem is also solved by a quantum concept processor as claimed in the enclosed claims. The quantum concept processor is configured for performing one or more steps of a method as described above. According to an exemplary implementation, the quantum concept processor is a digital annealing processing unit. This unit can be specially configured to perform quantum annealing or a quantum annealing emulation as explained above. The quantum concept processor can be of any type explained above.

Moreover, the above-mentioned problem is also solved by a computer program comprising instructions that, when the program is executed by one or more processors, cause each of the one or more processors to perform one or more steps of a method as described above. At least one of these processors is e.g. a quantum concept processor as explained above. Other processors can be configured for processing, by executing the computer program, preparatory or iterative steps of or for a method as explained above.

Moreover, the above-mentioned problem is also solved by a workplace for a network planner, configured for verifying an optimized routing determined by a method as described above. Such a workplace, for example, has verification means that are configured for an (automated or semi-automated) verification of an optimized routing determined by a method as described above. This serves a network planner to verify optimization results found by a method as described above. The verification means can be implemented in software and/or hardware. For example, the workplace can communicate or be connected to a system comprising a quantum concept processor that performs the method as described above. The results can then be taken over into the workplace.

Moreover, the above-mentioned problem is also solved by an interface arrangement comprising one or more interfaces to a plurality of communication nodes of a communications network in which data traffic is routed, wherein the interface arrangement is configured to automatically deploy an optimized routing determined by a method as described above to the communication nodes of the communications network. In this way, an optimized routing determined by a method as described above can be (automatically or semi-automatically) be deployed to a plurality of communication nodes of a respective communications network. For example, the interface arrangement can communicate or be connected to a workplace as describe above or to a system comprising a quantum concept processor that performs the method as described above. The results can then be taken over into the interface arrangement.

Moreover, as preparatory measure for one or more of the above-explained steps of the computer-implemented procedure, an interface can be implemented or used for reading out parameters from the communications network before a respective optimization and for inputting such parameters into the explained computer-implemented optimization procedure. The parameters for example comprises a network configuration, adjacency information for a graph description of the network, available capacities in the network and traffic demands to be expected.

Any aspects, features, effects and measures described alone or in combination with each other in the context of the method explained above can be applied to or find analogous representation in aspects, features, effects and measures described alone or in combination with each other in the context of the quantum concept processor or the computer program explained above, and vice versa.

The invention is further described below under consideration of several implementations with the aid of multiple drawings.

Figure 1          shows an exemplary configuration of a communications network with exemplary routings of traffic demands following a conventional approach.

Figure 2A         shows an exemplary configuration of a communications network with exemplary routings of traffic demands following an alternative approach.

Figure 2B         shows an exemplary configuration of a communications network with exemplary routings of traffic demands following an approach according to the invention.

Figure 3          shows an exemplary schematic illustration of potential communication paths for a routing of traffic demands between origin and destination nodes.

Figures 4A to 4D   show exemplary mathematical formulations of partial optimization problems following an approach according to the invention.

Figure 5          shows an exemplary schematic illustration of an algorithm performing an approach according to the invention.

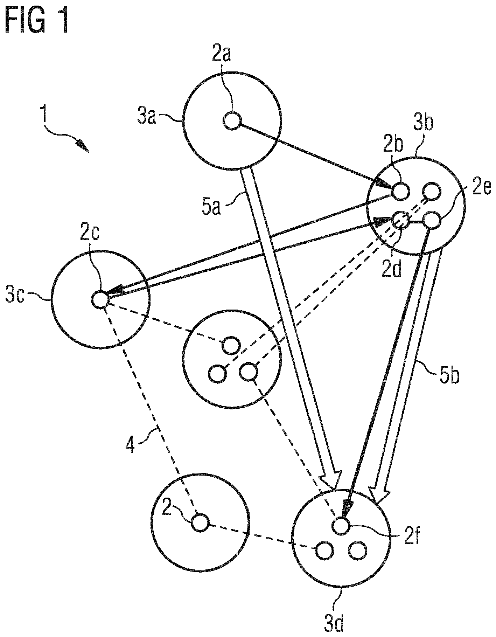

Figure 1 shows an exemplary configuration of a communications network 1 with exemplary routings of traffic demands 5a and 5b following a conventional approach. The communications network 1 comprises a plurality of communication nodes 2, wherein a connection 4 between two adjacent communication nodes 2 is called an edge. This is exemplarily illustrated between the communication node 2 and another communication node 2c, which can communicate with each other over the connection 4. Depending on the historically grown configuration and implementation of the communications network 1, several communication nodes 2 are aggregated into so-called aggregation nodes 3. As exemplarily illustrated in Figure 1, the communication node 2a is aggregated within aggregation node 3a, whereas other communication nodes 2b, 2d and 2e are aggregated in the aggregation node 3b, for example.

The communication nodes 2 are for example so-called label edge routers (LER) for routing incoming and outgoing data traffic within the network 1. The aggregation nodes 3 are called Meta nodes and are aggregation zones of LERs in a certain region of the network 1. For example, the aggregation nodes 3 are centralized aggregation zones of determined economic areas or cities between which a communication shall take place. In other applications, the aggregation nodes 3 can for example be entities of an industry network or of a traffic network, etc.

The communication network 1, in general, is part-mashed. This means that not all of the communication nodes 2 are connected or connectable with all other communication nodes 2. Instead, there are only several connections 4 (see dotted connections) between several communication nodes 2 implemented in the network 1, which, for example, came from historical evolution of the network 1. The connections 4 between respective communication nodes 2 are for example implemented by fibre optic connections. However, other technologies like radio technologies (e.g. 5G) or copper/DSL technologies are applicable as well, in general.

As explained above, Figure 1 illustrates a certain scenario of traffic demands 5a and 5b, according to which certain data volumes have to be transferred between respective communication nodes 2 within the network 1. As exemplarily illustrated, a first traffic demand 5a is between the communication node 2a within aggregation node 3a and another communication node 2f within aggregation node 3d. A second traffic demand 5b is between a communication node 2e within aggregation node 3b and again communication node 2f within aggregation node 3d. Each traffic demand 5a and 5b, hence, defines a determined volume to be transferred from an origin node to a destination node. In the exemplary scenario according to Figure 1 the origin node for traffic demand 5a is the communication node 2a, whereas the destination node for the traffic demand 5a is the communication node 2f. Analogously, for traffic demand 5b the origin node is communication node 2e and the destination node is communication node 2f.

In an alternative implementation, traffic demands can be defined as demands between aggregation nodes 3, irrespective on which internal communication node 2 within a respective aggregation node 3 the communication starts or ends. For example, the demands 5a, 5b can be defined as demands between the aggregation nodes 3a and 3d (demand 5a) and aggregation nodes 3b and 3d (demand 5b). In such implementation, there is a "virtual" edge between the respective aggregation node and its internal communication nodes, wherein the virtual edge has a very high capacity. This leads to the effect that it does not play a significant role, on which internal communication node 2 within a respective aggregation node 3 the communication starts or ends.

Each traffic demand 5a and 5b burdens the network 1 with a usage of the network's capacity, i.e. the capacity of respective connections 4 of potential communication paths between the respective communication nodes 2 in the network 1. In the exemplary scenario of Figure 1 the traffic demand 5a is transferred from communication node 2a to communication node 2f via the communication nodes 2b, 2c, 2d, 2e, and 2f.

In parallel, the traffic demand 5b is transferred simply over the connection 4 between the communication nodes 2e and 2f. In this scenario, two drawbacks occur. A first drawback lies in the communication path for the transfer of the traffic demand 5a being a long and complicated path through the network 1. This transfer embeds a plurality of communication nodes 2 and connections 4 in the network 1 for transferring the traffic demand 5a. A second drawback lies in the fact that both traffic demands 5a and 5b are finally transferred over the connection 4 between the communication nodes 2e and 2f. Hence the link capacity of the connection 4 between the nodes 2e and 2f is loaded to a significant extent. This may lead to an overload of the connection 4 between nodes 2e and 2f, resulting in increased latency or loss of data, etc.

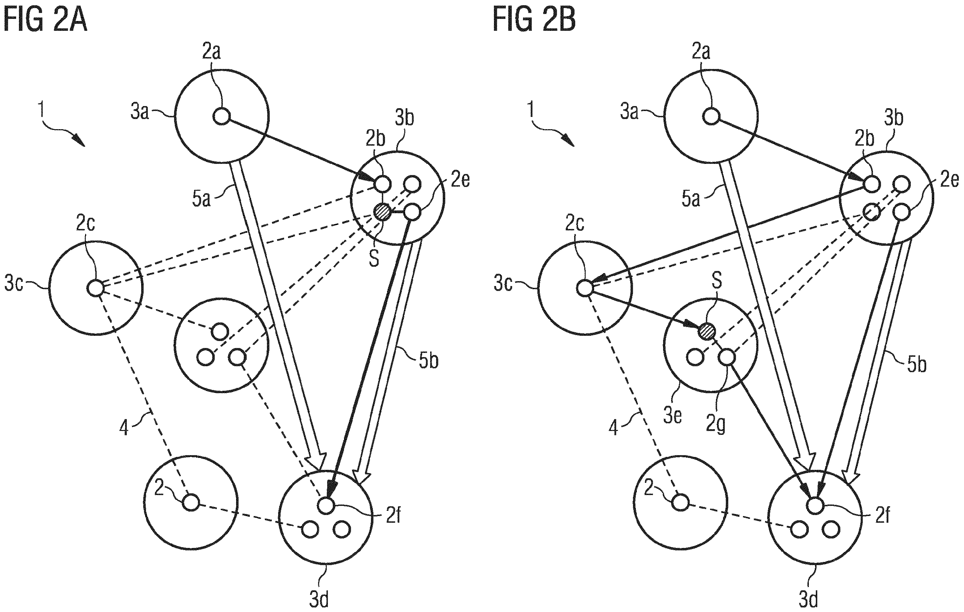

Figure 2A shows an exemplary configuration of the communications network 1 with exemplary routings of traffic demands 5a and 5b (see above) following an alternative approach. In the scenario according to Figure 2A, an intermediate node s, hereinafter called segment node s, is determined for routing the traffic demand 5a. The segment node s is configured within the aggregation node 3b together with other communication nodes 2b and 2e. Compared to Figure 1, for example, communication node 2d (see Figure 1) has been declared as segment node s according to the scenario of Figure 2A. This results in the traffic demand 5a being transferred on an alternative communication path starting again in communication node 2a and following the communication node 2b, the segment node s and the communication nodes 2e and 2f.

The scenario according to Figure 2A has the advantage over the scenario of Figure 1 that the communication path for the transfer of the traffic demand 5a has become closer to a short path or shortest path strategy, thereby keeping the number of involved communication nodes 2 and connections 4 in the network 1 low (at least lower than in the scenario of Figure 1). However, also in the scenario of Figure 2A the other drawback remains, according to which the connection 4 between the nodes 2e and 2f is still heavily loaded with both traffic demands 5a and 5b going over this connection of the network 1.

Figure 2B shows an exemplary configuration of the communications network 1 according to Figures 1 and 2A, but now with exemplary routings of the traffic demands 5a and 5b following an approach according to the invention. In the scenario of Figure 2B an optimized segment node s is chosen, which now lies within the aggregation node 3e instead of the aggregation node 3b according to Figure 2A. This results in the traffic demand 5a being transferred within a communication path starting in node 2a, the communication nodes 2b, 2c, segment node s, and communication nodes 2g and 2f. The other traffic demand 5b is, as in the scenarios according to Figures 1 and 2A, transferred between the two communication nodes 2e and 2f.

The scenario according to Figure 2B, hence, transfers the traffic demand 5a on a still relatively short path between the origin node 2a and the destination node 2f. The real value of the scenario according to Figure 2B, however, lies in the fact that the traffic demand 5a, on its final route segment towards its destination 2f is not transferred over the connection 4 between the nodes 2e and 2f, but over the connection 4 between the nodes 2g and 2f. This results in the connection 4 between the nodes 2e and 2f only being loaded with the traffic of traffic demand 5b.

Hence, the scenario of Figure 2B solves the drawbacks of the approaches according to Figures 1 and 2A, thereby achieving a short path communication in the network 1 together with a uniform and optimized distribution of the overall capacity usage of the connections 4 in the network 1 for all traffic demands 5 that have to be transferred in the network 1.

In the following, the implementation of the approach according to Figure 2B is further explained in detail.

The optimization problem to be solved lies in determining an optimized routing through the network 1 by selecting for each traffic demand 5 one short communication path from a set of potential short communication paths, such that a mathematically formulated quadratic stress function (core optimization problem) is minimized. This serves the purpose and has the technical effect of choosing for all traffic demands 5 in the network 1 respective communication paths that are as close as possible to a shortest path strategy combined with the effect that the overall capacity usage of connections 4 within the selected communication paths can be uniformly minimized in the network 1. This avoids some of the connections 4 lying in respective communication paths to be highly burdened or overloaded, whereas a minor load of other connections 4 could lead to significantly lower such stress.

In order to achieve the above advantageous effect, a computer-implemented algorithmic method for optimizing the routing within the communication network 1 is implemented. This is explained in the following.

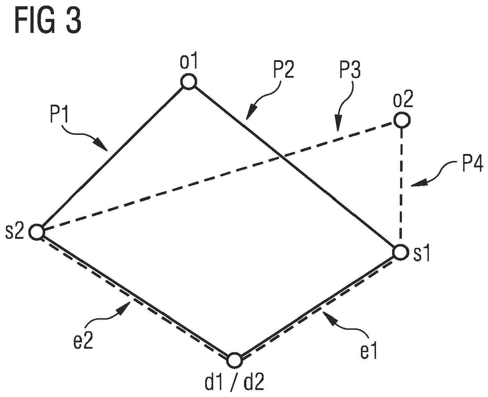

Figure 3 shows a schematic illustration of potential communication paths p1 to p4 for a routing of traffic demands between origin nodes o1, o2 and destination nodes d1, d2. In the exemplary scenario of Figure 3, two separate origin nodes o1 and o2 are implemented, whereas one destination node serves either as destination node d1 or as destination node d2. In this way, two traffic demands are defined, one traffic demand between the origin o1 and the destination d1 and the other traffic demand between the other origin o2 and the same destination d2. Determined data volumes are to be transferred between o1, d1 and o2, d2. The core optimization problem now lies in choosing and determining optimal communication paths for the traffic demands o1, d1 and o2, d2 such that short communication paths as close as possible to a shortest path approach are chosen and at the same time an overall capacity usage of connections within potential communication paths are minimized such that the overall usage of the capacities in the network is uniformly minimized within the network.

According to Figure 3, the set of potential short communication paths p1 to p4 is specified in advance. This can, for example, be done through application of a Dijkstra algorithm that calculates potential short communication paths between pairs of origin nodes and destination nodes o1, o2, d1, d2 for each traffic demand to be transferred. As exemplarily illustrated in Figure 3, path p1 goes from o1 over a segment node s2 to d1. Path p2 goes from o1 over the segment node s1 to d1. Path p3 goes from o2 over segment node s2 to d2. Path p4 goes from o2 over segment node s1 to d2. These are possible communication paths for a routing of data traffic between respective origins o1 and o2 towards the destination d1/d2.

The segment nodes s1 and s2 serve as intermediary nodes in the respective communication paths. Notwithstanding the core optimization problem of calculating optimized short communication paths for respective traffic demands, a special aspect in this optimization problem lies in choosing segment nodes s for the transmittal of traffic demands such that the core optimization problem is still fulfilled. The main advantage of configuration of segment nodes s1, s2 lies in a gained degree of freedom and flexibility for the routing of the traffic demands. Figure 3 exemplarily implements a two segment routing (2SR) protocol, as explained above.

Figure 3 further illustrates two exemplary connections that are further reference to as edges e1 and e2 and that may lie in potential communication paths. The edge e1 is configured between the segment node s1 and the destination d1/d2, whereas the edge e2 is configured between the segment node s2 and the destination d1/d2.

Let's assume different options for a routing of traffic demands between the origins o1, o2 and the destination d1/d2. An option for the routing from o1 to d1 is path p1 such that the data traffic o1, d1 is transferred over edge e2.

Another option for routing from o1 to d1 is path p2 such that data traffic o1, d1 is transferred over edge e1. Analogous assumptions can be applied for the data traffic o2, d2. Here, a first option is path p3 such that the data traffic o2, d2 is routed over edge e2. A second option for the routing from o2 to d2 is path p4 such that the data traffic o2, d2 is routed via edge e1. As can be seen from these different options for a routing of the data traffic o1, d1 and o2, d2, there are combinations of communication paths for o1, d1 and o2, d2, wherein the two edges e1 and e2 each are burdened with one traffic demand only. This is, for example, given with o1, d1 going path p1 and o2, d2 going path p4. However, there are also possible combinations of communication paths wherein one of the edges e1 and e2 is significantly and heavily loaded with both traffic demands, whereas the other of the two edges e1 and e2 is not used at all. This is for example given with o1, d1 going path p1 and o2, d2 going path p3 (or o1, d1 going path p2 and o2, d1 going path p4).

The latter combinations have the significant drawback that the capacity usage of one of the edges e1 and e2 is significantly higher, which may result in an overload or failure of the respective edge. Hence, the optimization problem lies in determining and selecting communication paths for the traffic demands o1, d1 and o2, d2 such that the overall capacity usage is distributed over both edges e1 and e2. In a specialised implementation of such optimization problem, a respective assignment of the segment nodes s1 and s2 is performed for an optimized selection of respective communication paths for the transfers of o1, d1 and o2, d2.

For solving such optimization problem, fractional capacity usages of all edges within the set of the potential short communication paths can be calculated for the whole set of traffic demands. As exemplarily given in Figure 3, such measure includes the calculation of fractional capacity usages of each of the edges e1 and e2 for each of the traffic demands o1, d1 and o2, d2. "Fractional capacity usages" of the respective edges means that based on the respective usage capacity limit of each edge, the fraction of the capacity usage is calculated that is required for each traffic demand to be transmitted over this edge.

For example, with regard to Figure 3, let's assume that each traffic demand o1, d1 and o2, d2 requires half of the maximum usage capacity of each edge e1 and e2 (i.e. 50% of the capacity). This means that each edge e1 and e2 is burdened with half of its usage capacity for each traffic demand o1, d1 and o2, d2. In other words, if o1, d1 goes over path p1 and o2, d2 goes over path p4, for example, the edges e1 and e2 both are burdened with 50% of their usage capacity limit. Otherwise, if o1, d1 goes over path p1 and o2, d2 goes over path p3, for example, then edge e2 is fully and completely burdened ($2\times50\% = 100\%$), thereby reaching its capacity limit, resulting in a utilization of the entire edge capacity of e2. Analogous assumptions can be applied when o1, d1 goes over p2 and o2, d2 goes over p4 with regard to the edge e1.

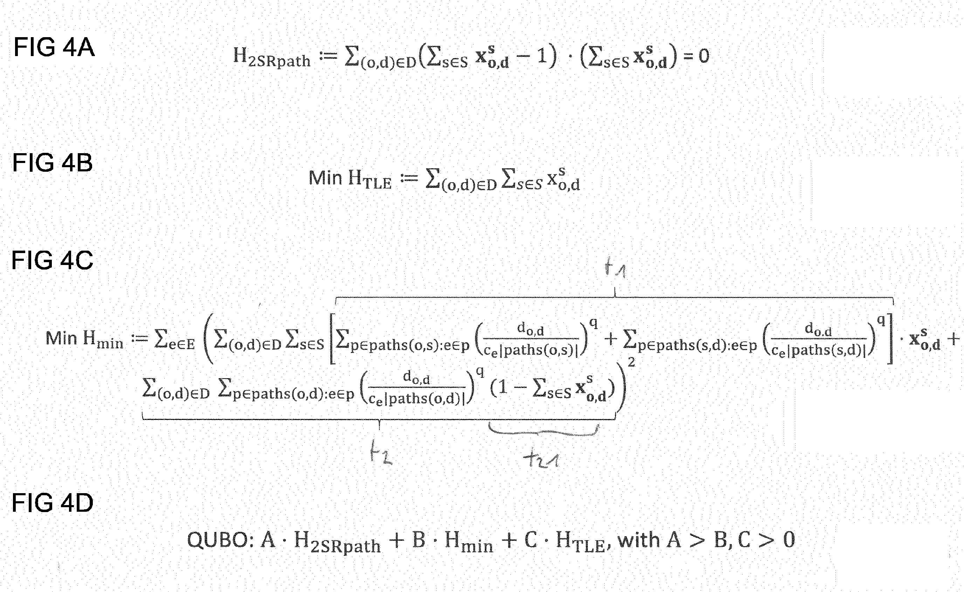

Such calculations of fractional capacity usages are performed for all remaining edges lying within potential communication paths p1 to p4 in the scenario of Figure 3. The calculated fractional capacity usages are then formulated as terms of a quadratic stress function which is further explained in detail below and in view of Figure 4C.

Figures 4A to 4D show exemplary mathematical formulations of partial optimization problems following the approach as explained above with regard to the Figures 2B and 3. The mathematical formulations of Figures 4A to 4D are represented as so-called Hamiltonian functions, short Hamiltonians.

The mathematical formulation of Figure 4A formulates a path condition according to which each traffic demand between respective origins and destinations (o, d) is to be routed along a shortest path or via exactly one segment node (s) between the respective origin node o and the respective destination node d. With respect to the exemplary scenario of Figure 3 this means that the traffic o1, d1 and the traffic o2, d2 can be either routed along a shortest path (not explicitly shown in Figure 3) or via exactly one segment node s1, s2. This means for each of the traffic demands o1, d1 and o2, d2 that only one segment node s1 or s2 can be chosen for each demand.

The mathematical formulation in Figure 4A is formulated as summed terms of binary variables $X_{o,d}^{s}$ that can assume the value "0" or the value "1" (or both with a certain probability) and are represented in a quantum concept processor as bits (or Q-bits as used hereinafter). For each segment node s and under consideration of each traffic demand o, d from an origin o to a destination d, a respective Q-bit $X_{o,d}^{s}$ can be set. The respective Q-bit $X_{o,d}^{s}$ is set to the value "1" if a respective segment node s is included in a respective communication path, and set to the value "0", if not. Considering the formulation of the Hamiltonian of Figure 4A, the Hamiltonian must be equal to "0". This is only fulfilled if for each traffic demand o, d only one single segment node s is chosen such that only one Q-bit $X_{o,d}^{s}$ assumes the value "1" and all other Q-bits $X_{o,d}^{s}$ for other segment nodes s have the value "0". Otherwise, if more than one segment nodes s would be chosen, the condition in Figure 4A would not be fulfilled. The path condition, mathematically formulated as Hamiltonian in Figure 4A has the effect that only communication paths over one single segment node s can be chosen in order to calculate only communication paths that are close to a shortest path strategy.

The mathematical formulation in Figure 4B formulates a cost condition regarding a number of overall used segment nodes in the network 1. This Hamiltonian sums all Q-bits $x_{o,d}^s$ with the value "1" (indicating segment nodes selected for a routing) over all traffic demands o, d. A partial optimization problem now lies in minimizing the number of selected segment nodes by minimizing the Hamiltonian of Figure 4B. This cost condition serves the purpose of minimizing as best as possible in the sense of a global optimization the number of used segment nodes in order to keep deployment and maintaining costs as low as possible (minimize these costs).

The mathematical formulation of the Hamiltonian according to Figure 4C represents a core optimization problem that is formulated as a quadratic stress function taking into account the calculated fractional capacity usages of all edges e within the set of potential short communication paths p for all traffic demands o, d. Hence, the core optimization problem here lies in minimizing the Hamiltonian according to Figure 4C in order to find optimized communication paths for all traffic demands within the network.

The Hamiltonian of Figure 4C considers summed terms for each edge e within a potential communication path p considering all traffic demands o, d and further considering a set of segment nodes s that can be chosen for selecting communication paths p. Assuming that the expression in Figure 4A is satisfied, the Hamiltonian of Figure 4C describes the sums of all calculated fractional capacity usages $d_{o,d}/c_e$ of all edges e that are part of potential communication paths p. $d_{o,d}$ here represents the volume of the traffic demand and $c_e$ represents the capacity of the respective edge e.

The fractional capacity usages $d_{o,d}/c_e$ are connected with the respective Q-bits $x_{o,d}^s$ into segment node terms. As explained above, the Q-bits $x_{o,d}^s$ can assume either the value "0" or the value "1" depending on whether a segment node s associated with a respective Q-bit $x_{o,d}^s$ is taken into account or not.

The Hamiltonian of Figure 4C has two main terms t1 and t2. t1 formulates a routing according to the 2SR-approach, wherein the first expression of t1 sums all fractional capacity usages $d_{o,d}/c_e$ of all demands o, d in the segment between an origin o and a segment node s. The second expression of t1 then sums all fractional capacity usages $d_{o,d}/c_e$ of all demands o, d in the segment between a respective segment node s and a destination d. The second term t2, considers shortest paths for all demands o, d by summing the fractional capacity usages $d_{o,d}/c_e$ of all edges e lying in these shortest paths. The shortest paths are defined such that none of the possible segment nodes s is chosen.

The Hamiltonian of Figure 4C is formulated such that either the term t1 or the term t2 is considered (but not both). Hence, either a path with one segment node s can be chosen or a shortest path with no segment node s. This is due to the setting of the respective Q-bits $x_{o,d}^s$. In the case that at least one segment node s is chosen, at least one Q-bit $x_{o,d}^s$ has the value "1". In this case, the term t1 multiplied with the Q-bits $x_{o,d}^s$ (one of them having the value "1") is considered. In this case, however, the second term t2 becomes "0", since the term t21 of t2 becomes "0". In contrast, in the case that none of the segment nodes s is chosen, all Q-bits $x_{o,d}^s$ have the value "0" resulting in that the term t1 is multiplied by "0" and is not considered. In this case, however, the second term t2 is considered, since its internal expression t21 becomes "1".

The exponentiation parameter "q" with values greater than 0 and less than or equal to 1 can be used as an additional problem-specific control parameter. For q < 1, demands with smaller volumes are preferentially assigned to segment nodes that result in a collection of shortest paths with small edge capacities. In contrast, for q = 1, all demands are evenly distributed without further preference.

In this way, the Hamiltonian of Figure 4C is formulated so as to consider either shortest paths or exclusively one segment node s for selecting a communication path p for each demand o, d, thereby considering all fractional capacity usages $d_{o,d}/c_e$ of all edges e lying in respective parts of the potential communication paths p.

Considering the scenario of Figure 3 for the two edges e1 and 2 exemplary, the Hamiltonian according to Figure 4C may have the following expression with q = 1:

$$\text{Min } H_{min} = \text{Min } \left( \frac{d_{o1,d1}}{c_{e1}} \cdot x^{s1}_{o1,d1} + \frac{d_{o2,d2}}{c_{e1}} \cdot x^{s1}_{o2,d2} \right)^2 + \left( \frac{d_{o1,d1}}{c_{e2}} \cdot x^{s2}_{o1,d1} + \frac{d_{o2,d2}}{c_{e2}} \cdot x^{s2}_{o2,d2} \right)^2$$

Under the assumption that each demand o1, d1 and o2, d2 burdens a respective edge e1, e2 with half of its capacity (50%), as explained above, the above term reaches a minimum, if o1, d1 and o2, d2 are routed over different segment nodes s. Then, the above term is:

$$\text{Min } H_{min} = \left( \frac{1}{2} \right)^2 + \left( \frac{1}{2} \right)^2 = \frac{1}{2}.$$

Otherwise, if o1, d1 and o2, d2 are routed over one common segment node s1 or s2 (and the other segment node is not used), the above term is:

$$\text{Min } H_{min} = \left( \frac{1}{2} + \frac{1}{2} \right)^2 = 1.$$

Hence, the costs/stress for the network is higher in the latter solution, which is worse over the above solution.

The above example shows that a choice of different segment nodes s for the two demands o1, s1 and o2, d2 is the preferred solution for achieving the optimization target of a short path routing together with distributing the overall capacity usage over the network.

The Hamiltonian of Figure 4C is generally solved for all traffic demands in a network by a quantum concept processor that runs through different settings of values for the respective Q-bits $x^s_{o,d}$, thereby calculating the respective result of the Hamiltonian. The target of doing so is to find the minimum of the Hamiltonian for respective set values of Q-bits $x^s_{o,d}$. As soon as a respective minimum of the Hamiltonian of Figure 4C is found, the respective values of the Q-bits $x^s_{o,d}$ leading to this minimum are stored and finally define respective communication paths of respective traffic demands. This is due to the fact that each Q-bit $x^s_{o,d}$ defines either a shortest path or a routing according to the 2SR-approach via exactly one segment node s for each demand o, d, as explained above. Hence, by calculating a minimum of the Hamiltonian of Figure 4C by using a quantum concept processor, an optimized routing is calculated by selecting for each traffic demand o, d one short communication path p from the set of potential short communication paths.

Figure 4D finally shows a global QUBO formulation of the overall optimization problem in which the three partial optimization problems according to Figures 4A to 4C are multiplied with a respective weighting factor A, B, C and summed to the global optimization problem. This global optimization problem is finally processed by applying a computer-implemented algorithm within the quantum concept processor. In this regard, a minimization of the Hamiltonian according to Figure 4C takes place, thereby considering further optimization constraints as formulated in the Hamiltonians according to Figures 4A and 4B.

In particular, regarding the Hamiltonian of Figure 4B, a compromise is calculated between a minimum of the Hamiltonian of Figure 4C and a minimum of the costs depending on the number of used segment nodes s as formulated in the Hamiltonian of Figure 4B. A global minimum of the Hamiltonian of Figure 4C could be found by significantly increasing the number of selected and used segment nodes s. This, however, would significantly increase the deployment and maintaining costs of segment nodes s as expressed in the Hamiltonian of Figure 4B. In contrast, strictly minimizing the costs for deployment and maintaining of segment nodes s (in fact choosing no segment node at all) would, however, lead to the fact that the Hamiltonian of Figure 4C cannot be satisfactorily solved to reach a sufficient minimum.

The global optimization problem formulated in Figure 4D respects a determined compromise between these partial optimization problems by seeking to find a minimum of the quadratic stress function for the capacity usage (Figure 4C) under consideration of a minimization of the overall number of used segment nodes for the routing (Figure 4B) and further under consideration of the constraint that only one or none segment node can be chosen for each traffic demand (Figure 4A).

With the aid of the weighting factors A, B and C according to Figure 4D different weights and focus on different partial optimization problems can be set. If for example the factor B is greater than the factor C, the focus is more on minimization of the maximal capacity usage and a uniform distribution of the capacity usage. Otherwise, if the factor B is smaller than the factor C, the focus is more on a minimization of the overall costs of the used segment nodes. Additionally, the factor A can for example be set so high, that this constraint is practically never violated during the optimization. Alternative to a mathematical formulation $A > B, C > 0$, for example another mathematical formulation is $A > B > 0, C >= 0$.

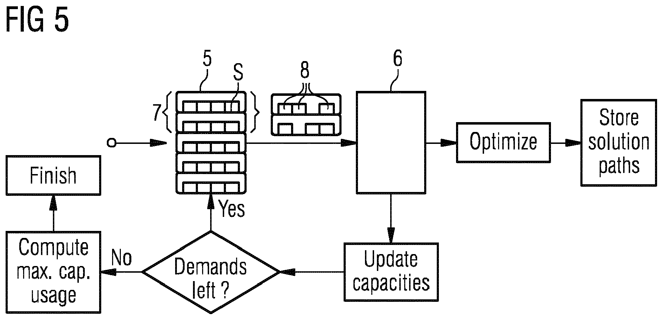

Figure 5 shows an exemplary schematic illustration of an algorithm performing the approach as explained above. Figure 5 shows the processing of the above explained method steps and procedure considering the set of traffic demands 5, wherein these traffic demands 5 are processed in a decomposed manner. This has the advantage of or is even necessary for processing the explained method despite limited hardware performance of the quantum concept processor 6 for solving the optimization problem as explained above with regard to Figures 4A to 4D. This optimization problem is very complex and has to be decomposed into several partial solutions that can be iteratively processed to find an optimal solution. In each iteration one partial solution is found by the quantum concept processor 6.

Accordingly, to decompose the optimization problem, the traffic demands 5 are sorted by volume in a descending order and split into discrete portions of demands. In particular, the traffic demands 5 with higher volume can be regarded first, followed then by those traffic demands 5 with smaller volume. For this purpose, first a subset 7 of the traffic demands 5 is regarded in the algorithmic implementation according to Figure 5. The subset 7 of traffic demands 5, for example, includes a certain percentage of the overall volume within the whole set of traffic demands 5. For example the subset 7 includes 30 % of the traffic volume to be transmitted through the network. For this subset 7 of traffic demands 5, in a next step, a subset 8 of potential segment nodes s from the set of potential segment nodes s is selected. In this way, the overall number of potential segment nodes s is reduced to a subset 8 of potential segment nodes s that is most relevant with regard to the selected subset 7 of traffic demands 5. For example, the subset 8 of potential segment nodes s for each traffic demand 5 can be preselected as those segment nodes s that have a close proximity to the shortest paths between respective origin and destination nodes of respective traffic demand 5 being part of the subset 7.

The pre-processed subset 7 of traffic demands 5 with the selected subset 8 of segment nodes s is then input to an algorithmic procedure within the quantum concept processor 6. For example, the quantum concept processor 6 according to Figure 5 is configured to solve the optimization problem by means of quantum annealing emulation. The quantum concept processor 6 applies the mathematical formulation of the overall optimization problem according to Figure 4D. The quantum concept processor 6 then calculates for the subset 7 of traffic demands 5 with the selected subset 8 of segment nodes s an optimized solution of the global optimization problem according to Figure 4D.

After the algorithmic procedure is completed, the finally calculated minimum of the global optimization problem according to Figure 4D is then output from the quantum concept processor 6 for the respective subset 7 of the traffic demands 5. The determined communication paths p according to the found optimum of the optimization problem are then stored for the subset 7 of the traffic demands 5.

Moreover, a respectively remaining usage capacity limit of the edges within the set of potential short communication paths p is updated under consideration that the determined optimized routing for the subset 7 of traffic demands 5 already requires a certain amount of the capacity in the network. In the case that there are any demands left, the procedure is iteratively performed for the remaining traffic demands 5 until all traffic demands 5 of the set of traffic demands are processed. In this case the maximum capacity usage for all traffic demands 5 to be transferred over determined communication paths through the network is computed. The algorithm is then finished.

Hence, by applying a computer-implemented algorithmic procedure according to Figure 5, which bases on the implementations and explanations above with regard to Figures 2B to 4D, an optimized routing can be provided for all traffic demands over individually selected short communication paths through a communication network 1.

The formulation of the optimization problem as QUBO representation has elegant properties regarding the here applied quantum concept computing within processor 6. Nowadays, quantum concept computing still reaches significant limits. However, with computer science more and more developing towards quantum computing, the herein described approach can be further enhanced and developed in future. For example, when quantum computing is more and more applicable for increasing complexities of underlying optimization problems, the decomposition strategy as explained in view of Figure 5 can be more and more reduced, which means the optimization problem can be more and more processed and computed as a whole without decomposition steps and iterations of the problem. Moreover, with quantum computing be more and more applicable, a more and more increasing number of Qbits, more and more complex optimization problems and/or more and more non-linear constraints can be taken into consideration by the approach explained herein.

The herein explained approach is primarily applicable to communication networks. However, the approach can also be applied to any other networks, like railway networks, energy grids, traffic networks, etc. in which certain "traffic" or "load" has to be transmitted throughout the network over optimized paths.

The embodiments illustrated and explained herein are merely exemplary.

List of reference signs

| 1 | communications network |
|---|---|
| 2, 2a-2f | communication nodes |
| 3, 3a-3e | aggregation nodes |
| 4 | connections between adjacent nodes |
| 5 | set of traffic demands |
| 5a, 5b | traffic demands |
| 6 | quantum concept processor |
| 7 | subset of traffic demands |
| 8 | subset of segment nodes |

| d, d1, d2 | destination node |
|---|---|
| e, e1, e2 | edges |
| o, o1, o2 | origin node |
| p, p1-p4 | potential communication path |
| s | set of segment nodes |
| s1, s2 | segment nodes |
| t1, t2, t21 | terms of a quadratic stress function |

**Claims**

1. Computer-implemented method for optimizing a routing of data traffic in a communications network (1) with a plurality of communication nodes (2) which are connectable over edges (4) of communication paths for a routing of the data traffic, wherein the method comprises the following steps:

   - Capturing a set of traffic demands (5), each traffic demand (5a, 5b) specifying a transfer of a determined data volume from an origin node (o) to a destination node (d) among the plurality of communication nodes (2),
   - Specifying a set of potential short communication paths (p) among possible communication paths between the respective origin nodes (o) and the respective destination nodes (d) specified in the set of traffic demands (5), wherein the edges (e) within the set of potential short communication paths (p) are assigned a respective usage capacity limit,
   - Calculating, for the set of traffic demands (5),
   fractional capacity usages of the edges (e) within the set of potential short communication paths (p), the fractional capacity usages being calculated based on the respective usage capacity limit,
   - Formulating the calculated fractional capacity usages as terms of a quadratic stress function,
   - Determining, by using a quantum concept processor (6), an optimized routing by selecting for each traffic demand (5a, 5b) of the set of traffic demands (5) one short communication path (p1-p4) from the set of potential short communication paths (p), such that the quadratic stress function is minimized.

2. The method according to claim 1, further comprising the following steps:

   - Specifying a set of potential segment nodes (s) among the plurality of communication nodes (2), wherein each of the potential segment nodes (s1, s2) defines as intermediate node a potential short communication path (p1-p4) as member of the set of potential short communication paths (p) between an origin node (o) and a destination node (d),
   - Formulating, in the quadratic stress function, segment node terms that connect the calculated fractional capacity usages of the edges (e) of a respective potential short communication path (p1-p4) with those segment nodes (s1, s2) within the set of potential segment nodes (s) that lead to the respective potential short communication path (p1-p4),
   - Calculating the segment node terms, by using the quantum concept processor (6), to choose segment nodes (s1, s2) within the set of potential segment nodes (s) such that the quadratic stress function is minimized for the determination of the optimized routing.

3. The method according to claim 2, wherein the segment node terms are calculated under consideration of a path condition that each traffic demand (5a, 5b) of the set of traffic demands (5) is routed along a shortest path or via exactly one segment node (s1, s2) between the respective origin node (o) and the respective destination node (d).

4. The method according to claim 2, wherein the segment node terms are calculated under consideration of a path condition that each traffic demand (5a, 5b) of the set of traffic demands (5) is routed along a shortest path or via multiple segment nodes (s1, s2) between the respective origin node (o) and the respective destination node (d).

5. The method according to any of claims 2 to 4, wherein the segment node terms are calculated under consideration of a cost condition such that a number of chosen segment nodes (s1, s2) is minimized.

6. The method according to any of claims 1 to 5, wherein the quadratic stress function is formulated as a quadratic unconstrained binary optimization (QUBO) function.

7. The method according to claims 3, 4, 5 and 6, wherein the quadratic stress function and at least one of the path condition and the cost condition each are weighted and combined into a global QUBO function.

8. The method according to any of claims 1 to 7, further comprising the following steps:

   - Selecting a subset of traffic demands (7) from the set of traffic demands (5),
   - Performing the method for the subset of traffic demands (7),
   - Storing the determined optimized routing for the subset of traffic demands (7), and
   - Updating a respectively remaining usage capacity limit of the edges (e) within the set of potential short communication paths (p) under consideration of the determined optimized routing for the subset of traffic demands (7).

9. The method according to claims 2 and 8, further comprising the following steps:

   - Selecting a subset of potential segment nodes (8) from the set of potential segment nodes (s),
   - Performing the method for the subset of potential segment nodes (8).

10. The method according to claim 8 or 9, wherein the method is iteratively performed for the remaining traffic demands (5a, 5b) until all traffic demands (5a, 5b) of the set of traffic demands (5) are processed.

11. A quantum concept processor (6), in particular a digital annealing processing unit or a quantum annealing processing unit, configured for performing one or more steps of a method according to any of claims 1 to 10.

12. A computer program, the computer program comprising instructions that, when the program is executed by one or more processors, cause each of the one or more processors to perform one or more steps of a method according to any of claims 1 to 10.

13. A computer-readable storage medium on which the computer program of claim 12 is stored.

14. A workplace system for a network planner having verification means implemented in hardware or software and connected to a system comprising a quantum concept processor, the workplace system being configured for verifying an optimized routing determined by a method according to any of claims 1 to 10.

15. An interface arrangement comprising one or more interfaces to a plurality of communication nodes (2) of a communications network (1) in which data traffic is routed, wherein the interface arrangement is configured to automatically deploy an optimized routing determined by a method according to any of claims 1 to 9 to the communication nodes (2) of the communications network (1).

**Patentansprüche**

1. Computerimplementiertes Verfahren zum Optimieren eines Routens von Datenverkehr in einem Kommunikationsnetzwerk (1) mit einer Vielzahl von Kommunikationsknoten (2), die für ein Routen des Datenverkehrs über Kanten (4) von Kommunikationspfaden verbindbar sind, wobei das Verfahren die folgenden Schritte umfasst:

   - Erfassen eines Satzes von Verkehrsanforderungen (5), wobei jede Verkehrsanforderung (5a, 5b) eine Übertragung eines bestimmten Datenvolumens von einem Ursprungsknoten (o) an einen Zielknoten (d) unter der Vielzahl von Kommunikationsknoten (2) angibt,
- Angeben eines Satzes von möglichen kurzen Kommunikationspfaden (p) unter möglichen Kommunikationspfaden zwischen den jeweiligen Ursprungsknoten (o) und den jeweiligen Zielknoten (d), die in dem Satz von Verkehrsanforderungen (5) angegeben sind, wobei den Kanten (e) innerhalb des Satzes von möglichen kurzen Kommunikationspfaden (p) eine jeweilige Nutzungskapazitätsgrenze zugeordnet ist,
- Berechnen, für den Satz von Verkehrsanforderungen (5), von fraktionellen Kapazitätsnutzungen der Kanten (e) innerhalb des Satzes von möglichen kurzen Kommunikationspfaden (p), wobei die fraktionellen Kapazitätsnutzungen auf der Grundlage der jeweiligen Nutzungskapazitätsgrenze berechnet werden,
- Formulieren der berechneten fraktionellen Kapazitätsnutzungen als Terme einer quadratischen Stressfunktion,
- Bestimmen, mithilfe eines Quantenkonzept-Prozessors (6), eines optimierten Routens durch Auswählen, für jede Verkehrsanforderung (5a, 5b) des Satzes von Verkehrsanforderungen (5), eines kurzen Kommunikationspfades (p1-p4) aus dem Satz von möglichen kurzen Kommunikationspfaden (p), derart, dass die quadratische Stressfunktion minimiert ist.

2. Verfahren nach Anspruch 1, darüber hinaus die folgenden Schritte umfassend:

- Angeben eines Satzes von möglichen Segmentknoten (s) aus der Vielzahl von Kommunikationsknoten (2), wobei jeder der möglichen Segmentknoten (s1, s2) als Zwischenknoten einen möglichen kurzen Kommunikationspfad (p1-p4) als Element des Satzes von möglichen kurzen Kommunikationspfaden (p) zwischen einem Ursprungsknoten (o) und einem Zielknoten (d) definiert,
- Formulieren, in der quadratischen Stressfunktion, von Segmentknotentermen, welche die berechneten fraktionellen Kapazitätsnutzungen der Kanten (e) eines jeweiligen möglichen kurzen Kommunikationspfades (p1-p4) mit jenen Segmentknoten (s1, s2) innerhalb des Satzes von möglichen Segmentknoten (s) verbinden, die zu dem jeweiligen möglichen kurzen Kommunikationspfad (p1-p4) führen,
- Berechnen der Segmentknotenterme mithilfe des Quantenkonzept-Prozessors (6), um Segmentknoten (s1, s2) innerhalb des Satzes von möglichen Segmentknoten (s) so zu wählen, dass die quadratische Stressfunktion für die Bestimmung der optimierten Leitweglenkung minimiert ist.

3. Verfahren nach Anspruch 2, wobei die Segmentknotenterme unter Berücksichtigung einer Pfadbedingung berechnet werden, dass jede Verkehrsanforderung (5a, 5b) des Satzes von Verkehrsanforderungen (5) entlang eines kürzesten Pfades oder über genau einen Segmentknoten (s1, s2) zwischen dem jeweiligen Ursprungsknoten (o) und dem jeweiligen Zielknoten (d) geleitet wird.

4. Verfahren nach Anspruch 2, wobei die Segmentknotenterme unter Berücksichtigung einer Pfadbedingung berechnet werden, dass jede Verkehrsanforderung (5a, 5b) des Satzes von Verkehrsanforderungen (5) entlang eines kürzesten Pfades oder über mehrere Segmentknoten (s1, s2) zwischen dem jeweiligen Ursprungsknoten (o) und dem jeweiligen Zielknoten (d) geleitet wird.

5. Verfahren nach einem der Ansprüche 2 bis 4, wobei die Segmentknotenterme unter Berücksichtigung einer Kostenbedingung so berechnet werden, dass eine Anzahl von gewählten Segmentknoten (s1, s2) minimiert ist.

6. Verfahren nach einem der Ansprüche 1 bis 5, wobei die quadratische Stressfunktion als eine quadratische binäre Optimierungsfunktion ohne Randbedingungen (QUBO) formuliert ist.

7. Verfahren nach den Ansprüchen 3, 4, 5 und 6, wobei die quadratische Stressfunktion und die Pfadbedingung und/oder die Kostenbedingung jeweils gewichtet und zu einer globalen QUBO-Funktion zusammengefasst werden.

8. Verfahren nach einem der Ansprüche 1 bis 7, darüber hinaus die folgenden Schritte umfassend:

- Auswählen eines Teilsatzes von Verkehrsanforderungen (7) aus dem Satz von Verkehrsanforderungen (5),
- Durchführen des Verfahrens für den Teilsatz von Verkehrsanforderungen (7),
- Speichern des bestimmten optimierten Routens für den Teilsatz von Verkehrsanforderungen (7), und
- Aktualisieren einer jeweils verbleibenden Nutzungskapazitätsgrenze der Kanten (e) innerhalb des Satzes von möglichen kurzen Kommunikationspfaden (p) unter Berücksichtigung des bestimmten optimierten Routens für den Teilsatz von Verkehrsanforderungen (7).

9. Verfahren nach den Ansprüchen 2 und 8, darüber hinaus die folgenden Schritte umfassend:

- Auswählen eines Teilsatzes von möglichen Segmentknoten (8) aus dem Satz von möglichen Segmentknoten (s),
- Durchführen des Verfahrens für den Teilsatz von möglichen Segmentknoten (8).

10. Verfahren nach Anspruch 8 oder 9, wobei das Verfahren für die verbleibenden Verkehrsanforderungen (5a, 5b) iterativ durchgeführt wird, bis alle Verkehrsanforderungen (5a, 5b) des Satzes von Verkehrsanforderungen (5) verarbeitet sind.

11. Quantenkonzept-Prozessor (6), insbesondere eine digitale Annealing-Prozessoreinheit oder eine Quanten-Annealing-Prozessoreinheit, die dafür ausgelegt ist, einen oder mehrere Schritte eines Verfahrens nach einem der Ansprüche 1 bis 10 durchzuführen.

12. Computerprogramm, wobei das Computerprogramm Anweisungen umfasst, die, wenn das Programm von einem oder mehreren Prozessoren ausgeführt wird, jeden des einen oder der mehreren Prozessoren dazu veranlassen, einen oder mehrere Schritte eines Verfahrens nach einem der Ansprüche 1 bis 10 durchzuführen.

13. Computerlesbares Speichermedium, auf dem das Computerprogramm nach Anspruch 12 gespeichert ist.

14. Arbeitsplatzsystem für einen Netzplaner mit Verifikationsmittel, die in Hardware oder Software implementiert und mit einem System verbunden sind, das einen Quantenkonzept-Prozessor aufweist, wobei das Arbeitsplatzsystem dafür ausgelegt ist, ein optimiertes Routen zu prüfen, die durch ein Verfahren nach einem der Ansprüche 1 bis 10 bestimmt sind.

15. Schnittstellenanordnung mit einer oder mehreren Schnittstellen für eine Vielzahl von Kommunikationsknoten (2) eines Kommunikationsnetzwerks (1), in dem Datenverkehr geroutet wird, wobei die Schnittstellenanordnung dafür ausgelegt ist, ein durch ein Verfahren nach einem der Ansprüche 1 bis 9 bestimmtes optimiertes Routen automatisch an den Kommunikationsknoten (2) des Kommunikationsnetzwerks (1) zum Einsatz zu bringen.

## Revendications

1. Procédé implémenté par ordinateur, destiné à optimiser un routage de trafic de données dans un réseau de communication (1) avec une pluralité de noeuds de communication (2) qui sont connectables via des arêtes (4) de chemins de communication pour un routage du trafic de données, sachant que le procédé comprend les étapes suivantes :

   - capture d'un ensemble de demandes de trafic (5), chaque demande de trafic (5a, 5b) spécifiant un transfert d'un volume de données prédéterminé depuis un noeud d'origine (o) à un noeud de destination (d) parmi la pluralité de noeuds de communication (2),
   - spécification d'un ensemble de chemins de communication (p) courts potentiels parmi des chemins de communication possibles entre les noeuds d'origine (o) respectifs et les noeuds de destination (d) respectifs spécifiés dans l'ensemble de demandes de trafic (5), sachant qu'une limite de capacité d'utilisation respective est assignée aux arêtes (e) au sein de l'ensemble de chemins de communication (p) courts potentiels,
   - calcul, pour l'ensemble de demandes de trafic (5), d'utilisations de capacité fractionnelles des arêtes (e) au sein de l'ensemble de chemins de communication (p) courts potentiels, les utilisations de capacité fractionnelles étant calculées sur la base de la limite de capacité d'utilisation respective,
   - formulation des utilisations de capacité fractionnelles calculées comme termes d'une fonction de contrainte quadratique,
   - détermination, moyennant un processeur de type quantique (6), d'un routage optimisé en sélectionnant, pour chaque demande de trafic (5a, 5b) de l'ensemble de demandes de trafic (5), un chemin de communication (p1-p4) court parmi l'ensemble de chemins de communication (p) courts potentiels, de telle sorte que la fonction de contrainte quadratique soit minimisée.

2. Le procédé selon la revendication 1, comprenant en outre les étapes suivantes :

   - spécification d'un ensemble de noeuds de segment (s) potentiels parmi la pluralité de noeuds de communication (2), sachant que chacun des noeuds de segment (s1, s2) potentiels définit comme noeud intermédiaire un chemin de communication (p1-p4) court potentiel comme élément de l'ensemble de chemins de communication (p) courts potentiels entre un noeud d'origine (o) et un noeud de destination (d),
- formulation, dans la fonction de contrainte quadratique, de termes de noeud de segment qui connectent les utilisations de capacité fractionnelles calculées des arêtes (e) d'un chemin de communication (p1-p4) court potentiel respectif avec lesdits noeuds de segment (s1, s2) au sein de l'ensemble de noeuds de segment (s) potentiels qui mènent au chemin de communication (p1-p4) court potentiel respectif,
- calcul des termes de noeud de segment, moyennant le processeur de type quantique (6), pour choisir des noeuds de segment (s1, s2) au sein de l'ensemble de noeuds de segment (s) potentiels de telle sorte que la fonction de contrainte quadratique soit minimisée pour la détermination du routage optimisé.

3. Le procédé selon la revendication 2, sachant que les termes de noeud de segment sont calculés compte tenu d'une condition de chemin que chaque demande de trafic (5a, 5b) de l'ensemble de demandes de trafic (5) soit routée le long d'un chemin le plus court ou via exactement un noeud de segment (s1, s2) entre le noeud d'origine (o) respectif et le noeud de destination (d) respectif.

4. Le procédé selon la revendication 2, sachant que les termes de noeud de segment sont calculés compte tenu d'une condition de chemin que chaque demande de trafic (5a, 5b) de l'ensemble de demandes de trafic (5) soit routée le long d'un chemin le plus court ou via de multiples noeuds de segment (s1, s2) entre le noeud d'origine (o) respectif et le noeud de destination (d) respectif.

5. Le procédé selon l'une quelconque des revendications 2 à 4, sachant que les termes de noeud de segment sont calculés compte tenu d'une condition de coût de telle sorte qu'un nombre de noeuds de segment (s1, s2) choisis soit minimisé.

6. Le procédé selon l'une quelconque des revendications 1 à 5, sachant que la fonction de contrainte quadratique est formulée comme une fonction d'optimisation binaire quadratique sans contrainte (QUBO).

7. Le procédé selon les revendications 3, 4, 5 et 6, sachant que la fonction de contrainte quadratique et au moins une de la condition de chemin et de la condition de coût sont chacune pondérées et combinées en une fonction QUBO globale.

8. Le procédé selon l'une quelconque des revendications 1 à 7, comprenant en outre les étapes suivantes :

   - sélection d'un sous-ensemble de demandes de trafic (7) à partir de l'ensemble de demandes de trafic (5),
   - exécution du procédé pour le sous-ensemble de demandes de trafic (7),
   - stockage du routage optimisé déterminé pour le sous-ensemble de demandes de trafic (7), et
   - mise à jour d'une limite de capacité d'utilisation respectivement restante des arêtes (e) au sein de l'ensemble de chemins de communication (p) courts potentiels compte tenu du routage optimisé déterminé pour le sous-ensemble de demandes de trafic (7).

9. Le procédé selon les revendications 2 et 8, comprenant en outre les étapes suivantes :

   - sélection d'un sous-ensemble de noeuds de segment (8) potentiels à partir de l'ensemble de noeuds de segment (s) potentiels,
   - exécution du procédé pour le sous-ensemble de noeuds de segment (8) potentiels.

10. Le procédé selon la revendication 8 ou 9, sachant que le procédé est effectué de manière itérative pour les demandes de trafic (5a, 5b) restantes jusqu'à ce que toutes les demandes de trafic (5a, 5b) de l'ensemble de demandes de trafic (5) soient traitées.

11. Processeur de type quantique (6), en particulier une unité de traitement de recuit numérique ou une unité de traitement de recuit quantique, configuré pour effectuer une ou plusieurs étapes d'un procédé selon l'une quelconque des revendications 1 à 10.

12. Programme informatique, le programme informatique comprenant des instructions qui, lorsque le programme est exécuté par un ou plusieurs processeurs, font effectuer à chacun de l'un ou des plusieurs processeurs une ou plusieurs étapes d'un procédé selon l'une quelconque des revendications 1 à 10.

13. Support de stockage lisible par ordinateur sur lequel le programme informatique de la revendication 12 est stocké.

**14.** Système de poste de travail pour un planificateur de réseau comportant des moyens de vérification implémentés dans un matériel ou un logiciel et connectés à un système comprenant un processeur de type quantique, le système de poste de travail étant configuré pour vérifier un routage optimisé déterminé par un procédé selon l'une quelconque des revendications 1 à 10.

**15.** Agencement d'interface comprenant une ou plusieurs interfaces à une pluralité de noeuds de communication (2) d'un réseau de communication (1) dans lequel un trafic de données est routé, sachant que l'agencement d'interface est configuré pour déployer automatiquement un routage optimisé déterminé par un procédé selon l'une quelconque des revendications 1 à 9 vers les noeuds de communication (2) du réseau de communication (1).

FIG 1

FIG 2A

FIG 2B

EP 4 152 726 B1

**FIG 3**

**FIG 4A**

$$H_{2SRpath} := \sum_{(o,d)\in D}\left(\sum_{s\in S} x_{o,d}^s - 1\right) \cdot \left(\sum_{s\in S} x_{o,d}^s\right) = 0$$

**FIG 4B**

$$\text{Min } H_{TLE} := \sum_{(o,d)\in D} \sum_{s\in S} x_{o,d}^s$$

**FIG 4C**

$$\text{Min } H_{min} := \sum_{e\in E}\left(\sum_{(o,d)\in D}\sum_{s\in S}\overbrace{\left[\sum_{p\in paths(o,s):e\in p}\left(\frac{d_{o,d}}{c_e|paths(o,s)|}\right)^q + \sum_{p\in paths(s,d):e\in p}\left(\frac{d_{o,d}}{c_e|paths(s,d)|}\right)^q\right]}^{t_1} \cdot x_{o,d}^s + \underbrace{\sum_{(o,d)\in D}\sum_{p\in paths(o,d):e\in p}\left(\frac{d_{o,d}}{c_e|paths(o,d)|}\right)^q \underbrace{\left(1-\sum_{s\in S} x_{o,d}^s\right)}_{t_{21}}}_{t_2}\right)^2$$

**FIG 4D**

$$\text{QUBO: } A \cdot H_{2SRpath} + B \cdot H_{min} + C \cdot H_{TLE}, \text{ with } A > B, C > 0$$

FIG 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020396154 A1
- US 2017286852 A1

**Non-patent literature cited in the description**

- **JUEXIAO SU.** *Fast Embedding of Constrained Satisfaction Problem to Quantum Annealer with Minimizing Chain Length*